# EUROPÄISCHE PATENTSCHRIFT

(11) **EP 3 356 227 B1**
(45) Veröffentlichungstag und Bekanntmachung des Hinweises auf die Patenterteilung: **09.12.2020**
(21) Anmeldenummer: 16777960.2
(22) Anmeldetag: 29.09.2016
(51) Int. Cl.: B64D 11/06

(54) **SITZVORRICHTUNG**
SEAT ARRANGEMENT
ASSISE

(30) Priorität: 30.09.2015 DE 102015116593
(43) Veröffentlichungstag der Anmeldung: 08.08.2018
(73) Patentinhaber: Recaro Aircraft Seating GmbH & Co. KG, 74523 Schwäbisch Hall (DE)
(72) Erfinder: JUSSLI, Zoltan, 74626 Bretzfeld (DE); JAKUBOWSKI, Jens, 73527 Schwäbisch Gmünd (DE); HORLACHER, Michael, 74523 Schwäbisch Hall (DE)
(74) Vertreter: Daub, Thomas
(86) Internationale Anmeldenummer: PCT/EP2016/073217
(87) Internationale Veröffentlichungsnummer: WO 2017/055417

(56) Entgegenhaltungen:
- DE-A1- 10 008 258
- US-A- 3 154 345
- US-A- 3 516 098
- US-A- 3 623 683
- US-A- 3 903 554
- US-A- 4 306 748
- US-A- 5 485 976
- US-A1- 2005 104 422
- US-A1- 2012 049 559

## Beschreibung

### Stand der Technik

Die Erfindung betrifft eine Flugzeugsitzvorrichtung gemäß Anspruch 1.

Es ist bereits eine Sitzvorrichtung mit einer Sitzbodeneinheit, insbesondere einer Flugzeugsitzbodeneinheit, vorgeschlagen worden.

Die Aufgabe der Erfindung besteht insbesondere darin, eine gattungsgemäße Vorrichtung mit verbesserten Eigenschaften hinsichtlich einer Kompaktheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Dokumente DE 100 08 258 A1, US2012/0049558 A1, US 5,485,976 A1 sowie US 3,623,683 A1 beschreiben den Stand der Technik.

### Vorteile der Erfindung

Die Erfindung geht aus von einer Sitzvorrichtung mit einer Sitzbodeneinheit, insbesondere einer Flugzeugsitzbodeneinheit.

Es wird vorgeschlagen, dass die Sitzbodeneinheit einen Aufnahmebereich zur Aufnahme eines Schwimmwestenmoduls, aufweist, mit zumindest einem oberen Wandelement, das zumindest eine Auflagefläche für ein Komfortelement bildet. Unter einer "Sitzbodeneinheit" soll dabei eine Sitzbodeneinheit eines Flugzeugsitzes verstanden werden, wobei die Sitzbodeneinheit zumindest eine tragende Grundstruktur des Flugzeugsitzes ausbildet, die Kräfte während eines Gebrauchs, insbesondere die Kräfte, die durch einen auf dem Flugzeugsitz sitzenden Passagier in den Flugzeugsitz eingeleitet werden, an eine Aufständereinheit weiterleitet, über die die Kräfte dann in einen Boden, insbesondere in einen Kabinenboden, abgeleitet werden. Die Sitzbodeneinheit ist dabei direkt oder indirekt mit der Aufständereinheit des Flugzeugsitzes verbunden. Unter einem "Flugzeugsitz" soll dabei ein Sitz, insbesondere ein Fluggastsitz, verstanden werden, der dazu vorgesehen ist, über seine Aufständereinheit in einer Flugzeugkabine aufgeständert zu werden und einen Sitzplatz für einen Passagier, insbesondere während eines Flugs, bereitzustellen. Dabei ist der Flugzeugsitz insbesondere dazu vorgesehen, in zumindest zwei unterschiedliche Stellungen gebracht zu werden, wobei der Flugzeugsitz vorzugsweise insbesondere zwischen einer Sitzstellung und einer Komfortstellung verstellbar ist. Dabei werden bei einer Verstellung des Flugzeugsitzes zwischen seinen zumindest zwei Stellungen vorzugsweise der Sitzboden und/oder eine Rückenlehne relativ zu der Aufständereinheit und/oder zueinander verschwenkt. Unter einem "Aufnahmebereich" soll dabei insbesondere ein zumindest teilweise abgetrennter Bereich verstanden werden, in dem ein Element, insbesondere ein Modul, zum Transport angeordnet werden kann, wobei ein in dem Aufnahmebereich angeordnetes Modul dabei zumindest teilweise, vorzugsweise im Wesentlichen, vollständig innerhalb des Aufnahmebereichs angeordnet ist. Der Aufnahmebereich spannt ein Volumen auf, in dem das zu transportierende oder zu verstauende Element oder Modul angeordnet ist. Unter einem "Schwimmwestenmodul" soll dabei insbesondere ein Modul verstanden werden, das wenigstens eine für einen Passagier, insbesondere in einem Notfall, vorgesehene Schwimmweste umfasst, die der Passagier, insbesondere sitzend, von seinem Flugzeugsitz erreichen kann. Dabei weist das Schwimmwestenmodul vorzugsweise ein Behältnis, in dem die Schwimmweste sicher aufbewahrt ist, sowie ein Zugelement auf, das bis in eine dem Passagier gut erreichbare Position geführt werden kann, sodass der Passagier das Schwimmwestenmodul über das Zugelement zu sich ziehen kann. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Auflagefläche" soll dabei insbesondere eine Fläche verstanden werden, die dazu vorgesehen ist, dass ein Element, wie insbesondere ein Komfortelement, vorzugsweise flächig aufliegt. Dabei werden über die Auflagefläche Kräfte, die über das Komfortelement in den Flugzeugsitz eingeleitet werden, von dem Komfortelement in die Sitzbodeneinheit eingeleitet. Unter einem "Komfortelement" soll dabei insbesondere ein Element verstanden werden, das den Sitzbereich für den Passagier bildet und dabei insbesondere einen wechselbaren und/oder gepolsterten Untergrund ausbildet. Das Komfortelement weist dabei vorzugsweise einen Bezug auf, der den Sitzbereich umgibt, wobei der Bezug dabei beispielsweise aus einem Textil, einem Leder oder einem anderen, dem Fachmann als sinnvoll erscheinenden Material gebildet sein kann. Vorzugsweise weist das Komfortelement ein Polster auf, das beispielsweise aus einem Weichschaum gebildet sein kann, wobei das Polster dabei vorzugsweise von dem Bezug umgeben ist. Grundsätzlich ist es auch denkbar, dass der Bezug einstückig mit dem Polster ausgebildet ist oder auch dass das Komfortelement kein Polster oder keinen Bezug aufweist. Dadurch kann die Sitzbodeneinheit besonders vorteilhaft ausgebildet werden. Durch eine erfindungsgemäße Ausgestaltung kann ein Modul, insbesondere ein Schwimmwestenmodul, besonders einfach und vorteilhaft in eine Sitzvorrichtung integriert werden und dadurch ein besonders vorteilhafter Sitz, insbesondere ein besonders vorteilhafter Flugzeugsitz, bereitgestellt werden.

Weiterhin wird vorgeschlagen, dass die Sitzbodeneinheit zumindest ein unteres Wandelement aufweist, das den Aufnahmebereich nach unten hin begrenzt. Unter einem "unteren Wandelement" soll dabei insbesondere ein den Aufnahmebereich begrenzendes Element verstanden werden, das den Aufnahmebereich insbesondere nach unten in Richtung einer Aufständerebene begrenzt. Das untere Wandelement kann dabei einstückig mit dem oberen Wandelement oder grundsätzlich auch als ein separates Element ausgebildet sein, das direkt oder indirekt mit dem oberen Element verbunden ist. Dadurch kann der Aufnahmebereich nach unten hin vorteilhaft ausgebildet werden.

Ferner wird vorgeschlagen, dass das obere und das untere Wandelement einstückig ausgebildet sind. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren, aus einem einzelnen Rohling oder vorteilhaft durch ein Faserverbundwerkstoffherstellverfahren. Dadurch können die Wandelemente der Sitzbodeneinheit besonders vorteilhaft ausgebildet werden.

Es wird weiterhin vorgeschlagen, dass die Sitzbodeneinheit wenigstens ein Seitenwandelement aufweist, welches den Aufnahmebereich begrenzt. Unter einem "Seitenwandelement" soll dabei insbesondere ein Wandelement verstanden werden, das den Aufnahmebereich in einer horizontalen Ebene seitlich begrenzt, also insbesondere in einer Querrichtung und in einer Sitzrichtung nach hinten. Dabei sind die Seitenwandelemente vorzugsweise einstückig mit dem oberen Wandelement und/oder dem unteren Wandelement ausgebildet. Dadurch kann der Aufnahmebereich besonders einfach ausgebildet werden.

Des Weiteren wird vorgeschlagen, dass der Aufnahmebereich bis auf eine Entnahmeöffnung zumindest im Wesentlichen geschlossen ausgebildet ist. Unter einer "Entnahmeöffnung" soll dabei insbesondere eine Öffnung in den Wandelementen und/oder Seitenwandelementen der Sitzbodeneinheit verstanden werden, durch die ein Inneres des Aufnahmebereichs mit einer Umgebung verbunden ist, wobei durch die Entnahmeöffnung Elemente und Module, insbesondere das Schwimmwestenmodul, in den Aufnahmebereich eingebracht oder aus diesem entnommen werden können. Durch die Entnahmeöffnung kann ein Passagier, insbesondere während er auf dem Flugzeugsitz sitzt, dessen Sitzboden zumindest teilweise von der Sitzbodeneinheit gebildet ist, das in dem Aufnahmebereich angeordnete Schwimmwestenmodul entnehmen. Unter "zumindest im Wesentlichen geschlossen" soll dabei insbesondere verstanden werden, dass die Wandungen und/oder die Seitenwandungen, die den Aufnahmebereich begrenzen, bis auf die Entnahmeöffnung vorzugsweise durchgehend ausgebildet sind und insbesondere keine weiteren Öffnungen aufweisen, wobei es grundsätzlich aber auch denkbar ist, dass in einer der Wandungen und/oder der Seitenwandungen, beispielsweise zur Gewichtsreduzierung der Sitzbodeneinheit, Ausnehmungen angeordnet sind, durch die der Aufnahmebereich zusätzlich zu der Entnahmeöffnung zumindest teilweise nach außen geöffnet ist. Dadurch kann der Aufnahmebereich besonders vorteilhaft und die Sitzbodeneinheit insbesondere steif ausgebildet werden.

Weiterhin wird vorgeschlagen, dass zumindest das obere und/oder das untere Wandelement zumindest zum Großteil eine dünne Wandstärke aufweisen. Unter einer "dünnen Wandstärke" soll dabei insbesondere verstanden werden, dass eine Stärke der Wandelemente weniger als 20 mm, vorzugsweise weniger als 15 mm und in einer besonders vorteilhaften Ausgestaltung weniger als 10 mm aufweist. Unter "zum Großteil" soll dabei insbesondere verstanden werden, dass die Wandelemente zumindest in mehr als 50 % ihrer Fläche eine entsprechend dünne Wandstärke aufweisen, wobei die Wandelemente vorteilhaft zumindest in 75 % und in einer besonders vorteilhaften Ausgestaltung in mehr als 85 % ihrer Fläche eine dünne Wandstärke aufweisen. Grundsätzlich ist es denkbar, dass die Wandelemente in stark belasteten Bereichen eine dickere Wandstärke aufweisen. Insbesondere ist es denkbar, dass die Wandelemente und/oder die Seitenwandelemente über ihre Erstreckung an verschiedenen Stellen leicht variierende Wandstärken aufweisen. Die Wandstärke der Wandelemente muss nicht konstant sein. Dadurch kann die Sitzbodeneinheit besonders vorteilhaft leicht ausgebildet werden.

Außerdem wird vorgeschlagen, dass das obere und/oder das untere Wandelement zumindest teilweise aus einem Kunststoff, insbesondere einem Verbundwerkstoff, ausgebildet sind. Unter einem "Verbundwerkstoff" soll dabei insbesondere ein Faserverbundwerkstoff verstanden werden. Unter einem "Faserverbundwerkstoff" soll dabei insbesondere ein zumindest zwei Hauptkomponenten umfassender Mehrphasenwerkstoff verstanden werden, der zumindest eine bettende Matrix sowie verstärkende Fasern aufweist. Die bettende Matrix kann vorzugsweise aus einem Kunststoff, einem Harz und/oder einem weiteren, dem Fachmann als sinnvoll erscheinenden Material gebildet sein und die Fasern können aus Kunststofffasern, Glasfasern, Kohlenstofffasern, Naturfasern und/oder anderen, dem Fachmann als sinnvoll erscheinenden Fasern gebildet sein. Grundsätzlich ist es auch denkbar, dass die Wandelemente aus einem anderen Material, wie beispielsweise einem Metallblech, wie beispielsweise aus einem Aluminium gebildet sind. Dadurch können die Wandelemente und insbesondere die Sitzbodeneinheit besonders vorteilhaft ausgebildet werden.

Es wird weiter vorgeschlagen, dass das obere Wandelement eine Erhöhung der Sitzbodeneinheit ausbildet. Unter einer "Erhöhung der Sitzbodeneinheit" soll dabei insbesondere verstanden werden, dass eine Oberseite der Sitzbodeneinheit von dem oberen Wandelement im Gegensatz zu einem restlichen Teil der Oberseite erhöht ist, also einen größeren Abstand zu der Aufständerebene aufweist als der restliche Teil der Oberseite. Dabei ist die Erhöhung durch das obere Wandelement in Querrichtung der Sitzbodeneinheit vorzugsweise mittig angeordnet. Die Sitzbodeneinheit ist dabei zu einer in Sitzrichtung verlaufenden Mittelachse im Wesentlichen symmetrisch ausgebildet. Dadurch kann der Aufnahmebereich besonders vorteilhaft ausgebildet werden.

Zudem wird vorgeschlagen, dass die Sitzbodeneinheit eine Entnahmeöffnung zur Entnahme des Moduls aus dem Aufnahmebereich aufweist, welche zumindest teilweise zwischen dem oberen Wandelement und einer Trägeraufnahme der Sitzbodeneinheit angeordnet ist. Unter einer "Trägeraufnahme" soll dabei insbesondere ein Bereich verstanden werden, in dem ein Tragrohr einer Aufständereinheit des Flugzeugsitzes aufgenommen und fest mit der Sitzbodeneinheit verbindbar ist. Dabei verläuft ein Trägeraufnahmebereich in einer Querrichtung und ist auf einer Unterseite der Sitzbodeneinheit angeordnet. Dabei weist die Sitzbodeneinheit vorzugsweise eine vordere Trägeraufnahme zur festen Anbindung der Sitzbodeneinheit an ein vorderes Tragrohr und eine hintere Trägeraufnahme zur festen Anbindung der Sitzbodeneinheit an ein hinteres Tragrohr auf. Die vordere Trägeraufnahme und die hintere Trägeraufnahme sind dabei in Sitzrichtung des Flugzeugsitzes beabstandet zueinander angeordnet. Dadurch kann die Entnahmeöffnung für den Aufnahmebereich besonders vorteilhaft platziert werden.

Weiter wird vorgeschlagen, dass der Aufnahmebereich zumindest im Wesentlichen zwischen einer vorderen und einer hinteren Trägeraufnahme der Sitzbodeneinheit angeordnet ist. Dadurch kann der Aufnahmebereich besonders vorteilhaft in dem Flugzeugsitz angeordnet werden.

Weiterhin wird vorgeschlagen, dass die Sitzbodeneinheit zumindest dazu vorgesehen ist, zwischen einer Sitzstellung und einer Komfortstellung verstellt zu werden. Unter einer "Sitzstellung" soll dabei insbesondere eine erste Stellung der Sitzbodeneinheit zu der Aufständereinheit verstanden werden, wobei der Sitzboden dabei vorzugsweise einen Winkel von etwa 3 Grad mit der Aufständerebene einschließt. Die Sitzstellung ist dabei vorzugsweise als eine TTL-Stellung ausgebildet, die eine aufrechte Stellung des Flugzeugsitzes darstellt. Unter einer "Komfortstellung" soll dabei insbesondere eine Stellung der Sitzbodeneinheit verstanden werden, in der diese aus der Sitzstellung herausbewegt wird und einen anderen Winkel mit der Aufständerebene einschließt. Die Komfortstellung bildet dabei vorzugsweise eine nach hinten gekippte Stellung des Flugzeugsitzes aus. Dadurch kann besonders vorteilhaft ein Flugzeugsitz bereitgestellt werden, der ein besonders vorteilhaft zugängliches Modul, wie insbesondere das Schwimmwestenmodul, aufweist und ebenfalls zwischen zwei Stellungen verstellbar ist, wodurch ein besonders hoher Komfort erreicht werden kann.

Des Weiteren wird vorgeschlagen, dass der Aufnahmebereich zumindest in einer Sitzrichtung im Wesentlichen schräg ausgebildet ist. Unter "in Sitzrichtung im Wesentlichen schräg" soll dabei insbesondere verstanden werden, dass der Aufnahmebereich in seinem Verlauf parallel zur Sitzrichtung unterschiedliche Höhen aufweist. Dabei weist der Aufnahmebereich insbesondere in einem hinteren Bereich, der dem hinteren Tragrohr zugewandt ist, einen geringeren Abstand zu der Aufständerebene auf als an seinem vorderen Ende an dem die Entnahmeöffnung angeordnet ist. Dadurch kann der Aufnahmebereich besonders vorteilhaft ausgebildet werden, sodass das Modul, insbesondere das Schwimmwestenmodul einfach aus dem Aufnahmebereich entnommen werden kann.

Ferner wird vorgeschlagen, dass die Sitzvorrichtung wenigstens ein Verschlusselement aufweist, das dazu vorgesehen ist, den Aufnahmebereich in wenigstens einem Betriebszustand zumindest im Wesentlichen zu verschließen. Unter einem "Verschlusselement" soll dabei insbesondere ein Element verstanden werden, das in zumindest einem Betriebszustand die Entnahmeöffnung des Aufnahmebereichs verschließt und somit den Aufnahmebereich nach außen hin im Wesentlichen komplett verschließt. Das Komfortelement weist in einem auf der Sitzbodeneinheit angebrachten Zustand im Bereich der Entnahmeöffnung eine Ausnehmung auf, durch die die Entnahmeöffnung und damit der Aufnahmebereich von außen zugänglich sind, wobei das Verschlusselement in zumindest einem Betriebszustand diese Ausnehmung verschließt. Das Verschlusselement ist dabei vorzugsweise verschwenkbar mit der Sitzbodeneinheit verbunden. Vorzugsweise ist das Verschlusselement dabei von einem durchsichtigen Element gebildet, sodass in einem verschlossenen Zustand von außen in den Aufnahmebereich geblickt werden kann. Beispielsweise kann das Verschlusselement von einem durchsichtigen Plastikelement gebildet sein. Grundsätzlich ist aber auch denkbar, dass das Verschlusselement zumindest teilweise einstückig mit dem Komfortelement ausgebildet ist und zum Freigeben der Entnahmeöffnung aus der Ausnehmung herausgeschwenkt oder von dem Komfortelement getrennt werden kann. Vorzugsweise ist das Verschlusselement in einem ungeöffneten Zustand mittels eines Siegels versiegelt, sodass mittels einer einfachen Sichtprüfung geprüft werden kann ob das in dem Aufnahmebereich angeordnete Modul unbeschädigt ist. Dadurch können der Aufnahmebereich und die Entnahmeöffnung, insbesondere in einem Normalbetriebszustand, in dem das Schwimmwestenmodul nicht gebraucht wird, für einen Passagier nicht störend abgedeckt werden.

Die erfindungsgemäße Sitzvorrichtung soll hierbei nicht auf die oben beschriebene Anwendung und Ausführungsform beschränkt sein. Insbesondere kann die erfindungsgemäße Sitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Sitzvorrichtung mit einer Sitzbodeneinheit, einem Aufnahmebereich und einem Schwimmwestenmodul,
- Fig. 2: eine weitere schematische Ansicht der Sitzbodeneinheit von oben,
- Fig. 3: eine weitere schematische Ansicht der Sitzbodeneinheit von unten,
- Fig. 4: eine schematische Ansicht der Sitzbodeneinheit mit einem Komfortelement und einem angedeuteten Verschlusselement,
- Fig. 5: eine Schnittansicht durch die Sitzbodeneinheit und das Komfortelement und
- Fig. 6: eine Vorderansicht auf die Sitzbodeneinheit mit dem Komfortelement.

### Beschreibung des Ausführungsbeispiels

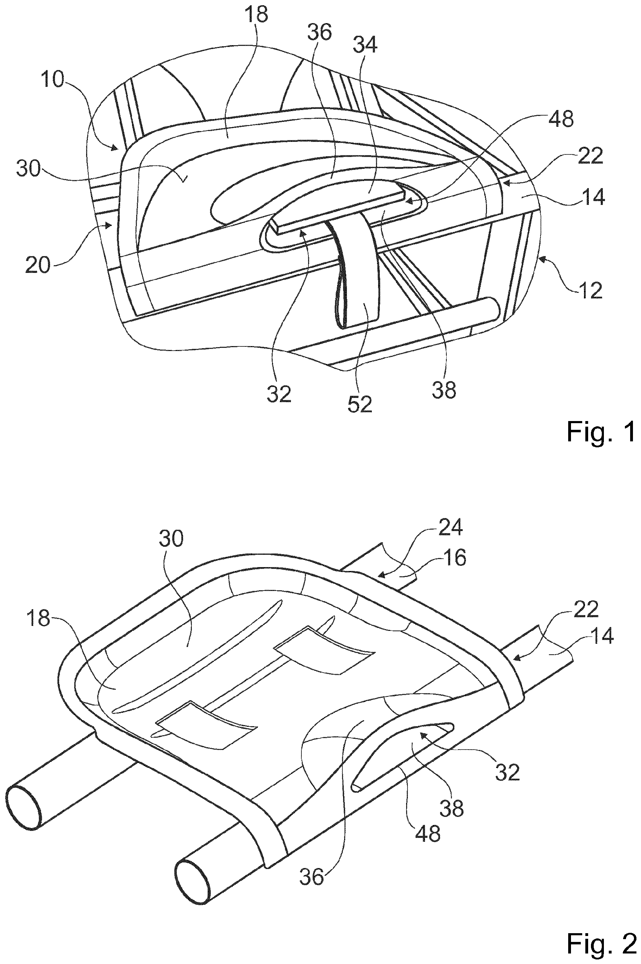

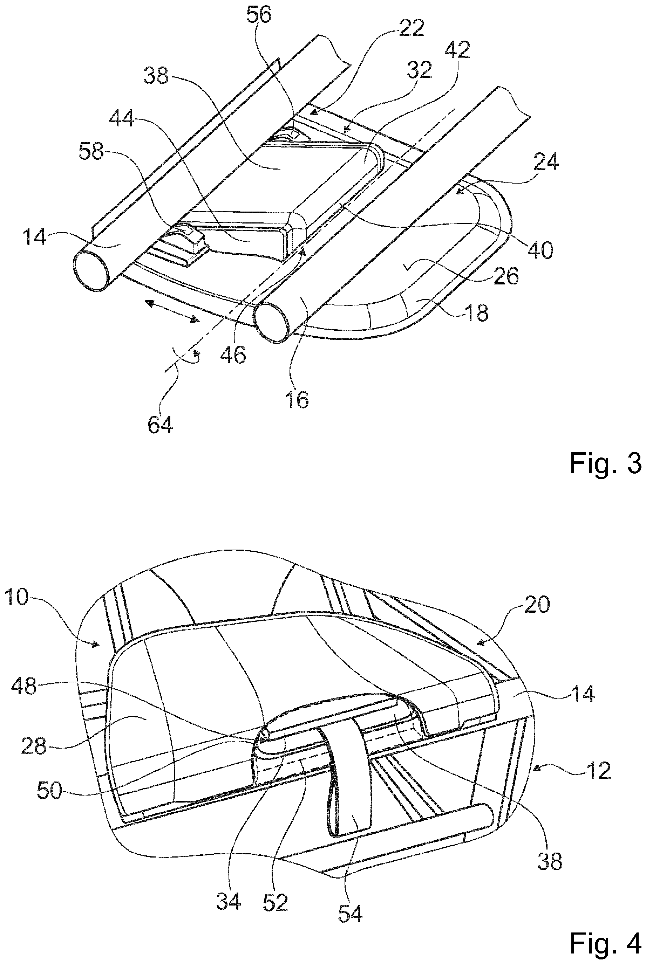

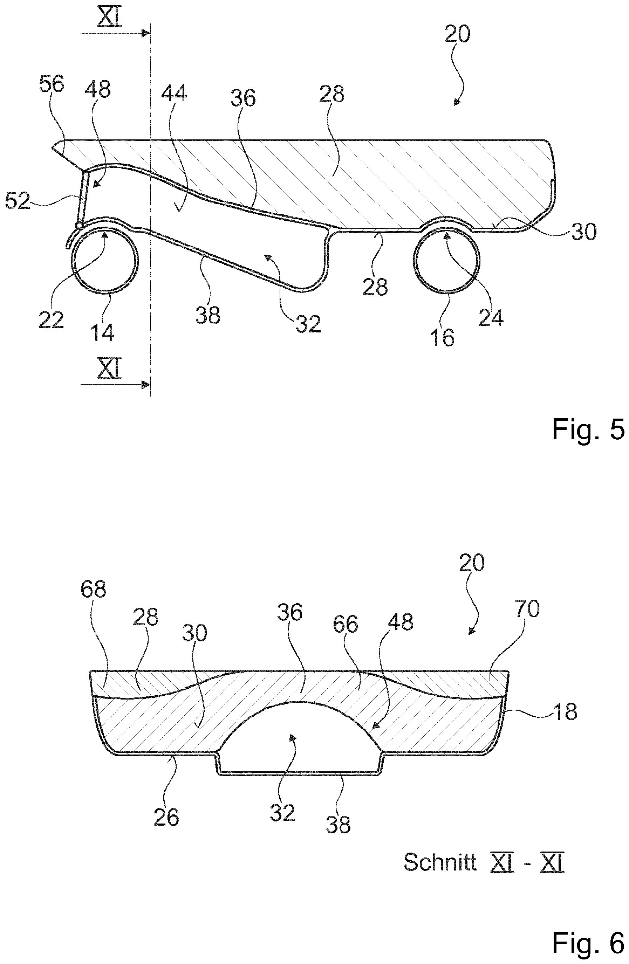

Die Figuren 1 bis 6 zeigen eine erfindungsgemäße Ausgestaltung einer Sitzvorrichtung. Die Sitzvorrichtung ist dabei insbesondere als eine Flugzeugsitzvorrichtung ausgebildet. Die Sitzvorrichtung ist als ein Teil eines Sitzes ausgebildet. Die Sitzvorrichtung ist insbesondere als Teil eines Flugzeugsitzes 10 ausgebildet. Dabei ist es denkbar, dass der Flugzeugsitz 10 Teil einer nicht näher dargestellten Sitzreihe ist. Der Flugzeugsitz 10 ist in einem montierten Zustand in einer nicht näher dargestellten Flugzeugkabine eines Flugzeugs aufgeständert. Zur Aufständerung weist die Flugzeugkabine vorzugsweise zwei parallel verlaufende Befestigungsschienen auf, über die der Flugzeugsitz 10 fest mit dem Kabinenboden verbunden werden kann. Der Kabinenboden bildet in dem Flugzeug eine Aufständerebene aus, auf der der Flugzeugsitz 10 aufständerbar ist. Der Flugzeugsitz 10 umfasst eine Aufständereinheit 12, über die der Flugzeugsitz 10 auf dem Kabinenboden aufgeständert ist. Die Aufständereinheit 12 umfasst wenigstens nicht näher dargestellte Sitzfüße, über die der Flugzeugsitz 10 auf dem Kabinenboden aufgeständert ist. Die Aufständereinheit 12 des Flugzeugsitzes 10 umfasst ein vorderes Tragrohr 14 und ein hinteres Tragrohr 16. Die Tragrohre 14, 16 bilden eine Tragstruktur des Flugzeugsitzes 10. Die Tragrohre 14, 16 verlaufen in Querrichtung des Flugzeugsitzes 10, die orthogonal zu einer Sitzrichtung des Flugzeugsitzes 10 ausgerichtet ist. Ist der Flugzeugsitz 10 Teil einer Sitzreihe, sind die Tragrohre 14, 16 auch Teil einer Tragstruktur der weiteren Flugzeugsitze der Sitzreihe. Die Tragrohre 14, 16 weisen einen ringförmigen Querschnitt auf. Dabei sind die Tragrohre 14, 16 dünnwandig ausgebildet.

Die Sitzvorrichtung weist eine Sitzbodeneinheit 18 auf. Die Sitzbodeneinheit 18 ist als eine Flugzeugsitzbodeneinheit ausgebildet. Die Sitzbodeneinheit 18 bildet einen Teil eines Sitzbodens 20 des Flugzeugsitzes 10 aus. Die Sitzbodeneinheit 18 bildet eine Grundstruktur des Sitzbodens 20 aus. Die Sitzbodeneinheit 18 bildet insbesondere eine tragende Struktur des Sitzbodens 20 aus. Die Sitzbodeneinheit 18 ist aus einem Faserverbundwerkstoff gebildet. Die Sitzbodeneinheit 18 ist aus mehreren Lagen von faserverstärkten Kunststoffplatten gebildet. Die faserverstärkten Kunststoffplatten sind dabei in einem Herstellungsprozess stoffschlüssig miteinander verbunden. Die faserverstärkten Kunststoffplatten bilden nach dem Herstellverfahren die Sitzbodeneinheit 18 einstückig aus. Grundsätzlich ist es auch denkbar, dass die Sitzbodeneinheit 18 aus einer Oberplatte und einer Unterplatte gebildet ist, die zumindest in Teilbereichen form-, kraft-, und/oder stoffschlüssig miteinander verbunden sind. Die Sitzbodeneinheit 18 bildet eine steife Einheit aus. Über die Sitzbodeneinheit 18 werden Kräfte, die während eines Gebrauchs auf den Sitzboden 20 des Flugzeugsitzes 10 wirken, in die Aufständereinheit 12 eingeleitet. Zur Kopplung an die Aufständereinheit 12 weist die Sitzbodeneinheit 18 eine vordere Trägeraufnahme 22 und eine hintere Trägeraufnahme 24 auf. Die Trägeraufnahmen 22, 24 werden von einer Unterseite 26 der Sitzbodeneinheit 18 ausgebildet. Über die Trägeraufnahmen 22, 24 ist die Sitzbodeneinheit 18 indirekt mit den Tragrohren 14, 16 der Aufständereinheit 12 verbindbar. Das vordere Tragrohr 14 ist dabei der vorderen Trägeraufnahme 22 zugeordnet. Das vordere Tragrohr 14 ist in montiertem Zustand in der Trägeraufnahme 22 angeordnet. Das hintere Tragrohr 16 ist der hinteren Trägeraufnahme 24 zugeordnet. Das hintere Tragrohr 16 ist in montiertem Zustand in der hinteren Trägeraufnahme 24 angeordnet. Der Flugzeugsitz 10 umfasst mehrere Verbindungselemente, über die die Tragrohre 14, 16 in den entsprechenden Trägeraufnahmen 22, 24 fest mit der Sitzbodeneinheit 18 gekoppelt sind. Die Trägeraufnahmen 22, 24 sind in einer Sitzrichtung des Flugzeugsitzes 10 beabstandet zueinander angeordnet. Die vordere Trägeraufnahme 22 weist zwei Anbindungselemente 56, 58 auf, die fest mit der Sitzbodeneinheit 18 ausgebildet sind. Über die zwei Anbindungselemente 56, 58 ist die Sitzbodeneinheit 18 über nicht näher dargestellte Schellen verschiebbar mit den Tragrohren 14, 16 verbunden. Über die Verbindung des vorderen Tragrohrs 14 mit der Sitzbodeneinheit 18 über die Anbindungselemente 56, 58 und die nicht näher dargestellten Schellen lässt sich die Sitzbodeneinheit 18 zu dem vorderen Tragrohr 14 verstellen. Dadurch ist eine Verstellung des Flugzeugsitzes 10 zwischen einer Sitzstellung und einer Komfortstellung möglich. Insbesondere die Rückenlehne und die Sitzbodeneinheit 18 lassen sich zwischen einer Sitzstellung und einer Komfortstellung verstellen. Die Sitzstellung ist dabei als TTL-Stellung ausgebildet. Die Sitzbodeneinheit 18 weist ein nicht näher dargestelltes Torsionsrohr und/oder eine Mechanik auf. Über die Mechanik ist das Torsionsrohr mit der Sitzbodeneinheit 18 gekoppelt. Das Torsionsrohr ist dabei mit Sitzteilern des Flugzeugsitzes 10 verbunden. Über das Torsionsrohr und die Mechanik ist die Sitzbodeneinheit 18 zwischen der Sitzstellung und der Komfortstellung verstellbar. Das Torsionsrohr ist dabei über eine angedeutete Rotationsachse 64 schematisch dargestellt. Bei einer Verstellung der Sitzbodeneinheit 18 zwischen der Sitzstellung und der Komfortstellung wird die Sitzbodeneinheit 18 zu der Rotationsachse 64 verdreht sowie in Sitzrichtung axial bewegt.

Grundsätzlich wäre es auch denkbar, dass die Sitzbodeneinheit 18 fest auf den Tragrohren 14, 16 angebracht ist und nicht zwischen einer Sitzstellung und einer Komfortstellung verstellbar ist. Dabei könnte die Sitzbodeneinheit 18 sowohl direkt mit den Tragrohren 14, 16 gekoppelt sein als auch indirekt über nicht näher erläuterte Befestigungselemente. Dabei würde die Sitzbodeneinheit 18 beispielsweise die Schellen aufweisen, über die die Sitzbodeneinheit 18 direkt mit dem Tragrohr 16 verbunden und axial auf diesem befestigt wäre.

Der Sitzvorrichtung umfasst ein Komfortelement 28. Das Komfortelement 28 ist dazu vorgesehen, den einen Sitzbereich des Sitzbodens 20 auszubilden. Das Komfortelement 28 ist aus einem Schaum gebildet. Grundsätzlich ist es auch denkbar, dass das Komfortelement 28 aus Lagen von mehreren, verschiedenen Polstern gebildet ist. Das Komfortelement 28 ist in einem montierten Zustand auf einer Oberseite 30 der Sitzbodeneinheit 18 angeordnet. Dabei ist das Komfortelement 28 fest mit der Oberseite 30 der Sitzbodeneinheit 18 verbunden. Die Oberseite 30 der Sitzbodeneinheit 18 bildet eine Auflagefläche für das Komfortelement 28 aus. Dazu sind auf der Oberseite 30 der Sitzbodeneinheit 18 mehrere, nicht näher dargestellte Verbindungselemente angebracht. Das Komfortelement 28 weist auf seiner der Sitzbodeneinheit 18 im montierten Zustand zugewandten Unterseite korrespondierend ausgebildete Verbindungselemente auf. Die Verbindungselemente sind dabei als korrespondierend zueinander ausgebildete Flausch- oder Hakenbänder ausgebildet. Grundsätzlich ist es auch denkbar, dass die Verbindungselemente auf eine andere, dem Fachmann als sinnvoll erscheinende Weise ausgebildet sind, wie beispielsweise als Druckknöpfe oder anders ausgebildete Form- und/oder Kraftschlusselemente. Das Komfortelement 28 ist dabei aus unterschiedlichen Schaumstoffen gebildet. In einem hinteren Bereich weist das Komfortelement 28 einen härteren Schaum auf als in einem vorderen Bereich. Insbesondere weist das Komfortelement 28 einen ersten Zentralschaumbereich 66 auf, der aus einem härteren Schaum gebildet ist als zwei Seitenschaumbereiche 68, 70. Der Zentralschaumbereich 66 bildet dabei ein Grundgerüst des Komfortelements 28 und bildet insbesondere einen unteren Teil des Komfortelements 28 und mittig, im Bereich des Aufnahmebereichs 32 einen oberen Bereich aus. Mittig bildet der Zentralschaumbereich 66 dabei die Sitzfläche aus. In einem vorderen Bereich des Komfortelements 28 sind seitlich des Zentralschaumbereichs 66 in einem oberen Bereich die Seitenschaumbereiche 68, 70 ausgebildet. Die Seitenschaumbereiche 68, 70 sind aus einem weichen Schaum gebildet. Dadurch können die seitlichen Bereiche des Komfortelements 28, in denen Oberschenkel eines auf dem Flugzeugsitz sitzenden Passagiers aufliegen, besonders vorteilhaft gepolstert werden. Ein Komfort des Sitzbodens 20 kann dadurch vorteilhaft erhöht werden. Die unterschiedlichen Schäume, die das Komfortelement 28 ausbilden, sind dabei fest miteinander verbunden. Durch die unterschiedlich starken Schäume kann das Komfortelement 28 besonders vorteilhaft stabil und komfortabel ausgebildet werden. Grundsätzlich ist es natürlich auch denkbar, dass das Komfortelement 28 lediglich aus einem Schaumstoff mit einer gleichbleibenden Härte gebildet ist oder dass das Komfortelement 28 aus mehr als zwei unterschiedlich harten Schaumstoffen gebildet ist, die unterschiedlich harte Zonen des Komfortelements 28 ausbilden.

Die Sitzbodeneinheit 18 umfasst einen Aufnahmebereich 32. Der Aufnahmebereich 32 ist, in Querrichtung gesehen, mittig in der Sitzbodeneinheit 18 angeordnet. Dabei weist ein erstes seitliches Ende des Aufnahmebereichs 32 einen Abstand zu einer ersten Seite der Sitzbodeneinheit 18 auf, der gleich groß ist wie ein Abstand des zweiten seitlichen Endes des Aufnahmebereichs 32 zu einer zweiten Seite der Sitzbodeneinheit 18. In der Sitzrichtung des Flugzeugsitzes 10 gesehen, erstreckt sich der Aufnahmebereich 32 von einem vorderen Bereich der Sitzbodeneinheit 18 bis in einen mittleren Bereich der Sitzbodeneinheit 18. Dabei erstreckt sich der Aufnahmebereich 32 oberhalb des vorderen Tragrohrs 14. Der Aufnahmebereich 32 ist zum Großteil zwischen der vorderen Trägeraufnahme 22 und der hinteren Trägeraufnahme 24 angeordnet. In einem montierten Zustand erstreckt sich der Großteil des Aufnahmebereichs 32 zwischen dem vorderen Tragrohr 14 und dem hinteren Tragrohr 16 der Aufständereinheit 12 des Flugzeugsitzes 10. Dabei ist der Aufnahmebereich 32 in einer Horizontalebene zu einem Großteil zwischen den beiden Tragrohren 14, 16 angeordnet. Der Aufnahmebereich 32 ist, in Sitzrichtung gesehen, schräg angeordnet. Dabei verläuft der Aufnahmebereich 32 von einem hinteren, unteren Bereich in Richtung des vorderen Endes nach oben von der Aufständerebene weg. In dem hinteren Bereich ist der Aufnahmebereich 32 in etwa auf der Höhe der Tragrohre 14, 16 angeordnet. An dem vorderen Bereich ist der Aufnahmebereich 32 im Bezug auf die Aufständerebene oberhalb der Tragrohre 14, 16 angeordnet. Durch den schrägen Verlauf des Aufnahmebereichs 32 kann eine besonders vorteilhafte Entnahmerichtung erreicht werden, durch die das Schwimmwestenmodul 34 besonders einfach aus dem Aufnahmebereich 32 gezogen werden kann.

Der Aufnahmebereich 32 ist zur Aufnahme eines Schwimmwestenmoduls 34 vorgesehen. Das Schwimmwestenmodul 34 umfasst zumindest eine Schwimmweste, ein Behältnis, in dem die Schwimmweste sicher angeordnet ist, und ein Zugelement 54, an dem das Schwimmwestenmodul 34 von einem Passagier aus dem Aufnahmebereich 32 gezogen werden kann. Das Zugelement 54 ist fest mit dem Schwimmwestenmodul 34 verbunden. Das Zugelement 54 ist dabei als ein Band ausgebildet. Das Zugelement 54 ist dabei als ein breites Band ausgebildet, das von einem Passagier gut ergriffen werden kann. Grundsätzlich ist es auch denkbar, dass das Zugelement 54 eine Halteunterstützung, wie beispielsweise eine Schlaufe oder einen Griffhaken, aufweist. Grundsätzlich ist es auch denkbar, dass das Zugelement 54 auf eine andere, dem Fachmann als sinnvoll erscheinende Weise ausgebildet ist. Dabei ist grundsätzlich auch denkbar, dass das Schwimmwestenmodul 34 auf eine andere Art ausgebildet ist und beispielsweise kein Behältnis aufweist. Grundsätzlich ist es auch denkbar, dass das in dem Aufnahmebereich 32 angeordnete Modul als ein anderes, dem Fachmann als sinnvoll erscheinendes Modul ausgebildet ist, beispielsweise als ein Verstaumodul, in dem Utensilien verstaut werden können.

Die Sitzbodeneinheit 18 weist ein oberes Wandelement 36 auf. Das obere Wandelement 36 begrenzt den Aufnahmebereich 32 in Richtung der Oberseite 30 der Sitzbodeneinheit 18. Das obere Wandelement 36 ist zumindest teilweise identisch mit der Oberseite 30 der Sitzbodeneinheit 18. Das obere Wandelement 36 bildet dabei zumindest einen Teil der Auflagefläche für das Komfortelement 28 aus. Der Aufnahmebereich 32 ist in Richtung der Oberseite 30 von dem oberen Wandelement 36 begrenzt. Das obere Wandelement 36 bildet eine Erhöhung der Sitzbodeneinheit 18 aus. Dabei bildet das obere Wandelement 36 insbesondere in dem vorderen Bereich des Aufnahmebereichs 32 die Erhöhung aus. In einem vorderen, dem vorderen Ende der Sitzbodeneinheit 18 zugewandten Bereich weist das Wandelement 36 in montiertem Zustand der Sitzbodeneinheit 18 einen größeren Abstand zu der Aufständerebene auf als in einem hinteren, dem hinteren Ende der Sitzbodeneinheit 18 zugewandten Bereich. In dem hinteren Bereich bildet das obere Wandelement 36 im Wesentlichen eine Ebene mit einem Rest der Oberseite 30 in dem hinteren Bereich aus.

Die Sitzbodeneinheit 18 weist ein unteres Wandelement 38 auf. In Richtung der Aufständerebene ist der Aufnahmebereich 32 von dem unteren Wandelement 38 begrenzt. Das untere Wandelement 38 ist beabstandet zu dem oberen Wandelement 36 angeordnet. Das obere Wandelement 36 und das untere Wandelement 38 begrenzen den Aufnahmebereich 32 in vertikaler Richtung. An einem hinteren Ende 46 weist der Aufnahmebereich 32 eine größte vertikale Erstreckung auf. An dem hinteren Ende 46 des Aufnahmebereichs 32, das dem hinteren Tragrohr 16 zugewandt ist, weisen das obere Wandelement 36 und das untere Wandelement 38 einen maximalen Abstand zueinander auf. An dem hinteren Ende 46 weist das untere Wandelement 38 einen geringeren Abstand zu der Aufständerebene auf als das hintere Tragrohr 16. Das hintere Ende 46 des Aufnahmebereichs 32 ragt bis in einen Bereich unterhalb der Tragrohre 14, 16. Das hintere Ende 46 ist auf einer dem vorderen Tragrohr 14 zugewandten Seite des hinteren Tragrohrs 16 angeordnet. Von dem hinteren Ende 46 verläuft das untere Wandelement 38 in Richtung des vorderen Tragrohrs 16 schräg nach oben. Das untere Wandelement 38 ist in seinem vorderen Bereich oberhalb des vorderen Tragrohrs 14 angeordnet. Die Sitzbodeneinheit 18 weist drei Seitenwandelemente 40, 42, 44 auf, die den Aufnahmebereich 32 in einer horizontalen Ebene in drei Richtungen begrenzen. Das erste Seitenwandelement 40 ist als eine Rückwandung ausgebildet. Das erste Seitenwandelement 40 begrenzt den Aufnahmebereich 32 nach hinten. Das erste Seitenwandelement 40 bildet das hintere Ende 46 des Aufnahmebereichs 32 aus. Das erste Seitenwandelement 40 ist dem hinteren Tragrohr 16 zugewandt. Die beiden Seitenwandelemente 42, 44 begrenzen den Aufnahmebereich 32 jeweils seitlich. Die beiden Seitenwandelemente 42, 44 verlaufen dabei im Wesentlichen parallel zur Sitzrichtung des Flugzeugsitzes 10. Grundsätzlich ist auch denkbar, dass die beiden Seitenwandelemente 42, 44 verkippt zu der Sitzrichtung des Flugzeugsitzes 10 verlaufen. Die beiden Seitenwandelemente 42, 44 sind schräg ausgebildet und weisen an ihren hinteren, dem als Rückwandung ausgebildeten ersten Seitenwandelement 40 zugewandten Seiten einen geringeren Abstand zu der Aufständerebene auf als an ihren vorderen Seiten. An ihren hinteren Seiten erstecken sich die Seitenwandelemente 42, 42 weiter von der Unterseite 26 der Sitzbodeneinheit 18 weg als an ihren vorderen Seiten.

Das obere Wandelement 36 und das untere Wandelement 38 sind einstückig miteinander ausgebildet. Die Wandelemente 36, 38 und die Seitenwandelemente 40, 42, 44 sind einstückig miteinander ausgebildet. Die Wandelemente 36, 38 und die Seitenwandelemente 40, 42, 44 weisen eine dünne Wandstärke auf. Die Wandstärke der Wandelemente 36, 38 und der Seitenwandelemente 40, 42, 44 ist dabei kleiner als 10 mm. Das obere Wandelement 36 und das untere Wandelement 38 sind aus einem Kunststoff, insbesondere einem Faserverbundwerkstoff, hergestellt. Die Seitenwandelemente 40, 42, 44 sind ebenfalls aus einem Faserverbundwerkstoff gebildet. Die Wandelemente 36, 38 und die Seitenwandelemente 40, 42, 44 sind einstückig mit der gesamten Sitzbodeneinheit 18 ausgebildet. Die Wandelemente 36, 38 und die Seitenwandelemente 40, 42, 44 sind zusammen mit der Sitzbodeneinheit 18 aus dem Faserverbundwerkstoff ausgebildet. Dabei sind die Wandelemente 36, 38 und der Rest der Sitzbodeneinheit 18 zusammen in einem Herstellverfahren aus einem Faserverbundwerkstoff hergestellt. Grundsätzlich wäre es auch denkbar, dass zumindest Teile der Wandelemente 36, 38 oder der Seitenwandelemente 40, 42, 44 als separat ausgebildete Einzelteile ausgebildet sind, die in einem Zusammenbau mit einem Rest der Sitzbodeneinheit 18 auf eine dem Fachmann als sinnvoll erscheinende Weise, beispielsweise durch Verkleben oder Verschrauben, fest verbunden werden.

Der Aufnahmebereich 32 weist eine Entnahmeöffnung 48 auf. Die Entnahmeöffnung 48 ist dazu vorgesehen, dass ein Modul, insbesondere das Schwimmwestenmodul 34, in den Aufnahmebereich 32 eingebracht und wieder entnommen werden kann. Über die Entnahmeöffnung 48 kann ein Passagier das Schwimmwestenmodul 34 aus dem Aufnahmebereich 32 entnehmen. Dabei kann der Passagier das Schwimmwestenmodul 34, insbesondere während er auf dem Flugzeugsitz 10 sitzt, über die Entnahmeöffnung 48 aus dem Aufnahmebereich 32 entnehmen. Der Aufnahmebereich 32 ist bis auf die Entnahmeöffnung 48 geschlossen. Dabei ist der Aufnahmebereich 32 bis auf die Entnahmeöffnung 48 von den Wandelementen 36, 38 und den Seitenwandelementen 40, 42, 44 vollständig umgeben. Die Wandelemente 36, 38 und die Seitenwandelemente 40, 42, 44 sind dazu als durchgängige Elemente ausgebildet. Die Wandelemente 36, 38 und die Seitenwandelemente 40, 42, 44 weisen keine Durchgangsausnehmungen auf. Dadurch kann eine besonders stabile und torsionssteife Sitzbodeneinheit 18 erreicht werden. Grundsätzlich ist es aber auch denkbar, dass die Wandelemente 36, 38 und/oder die Seitenwandelemente 40, 42, 44 zumindest teilweise Ausnehmungen oder Durchgangsausnehmungen aufweisen, durch die eine Gewichtsersparnis erreicht und dadurch eine besonders leichte Sitzbodeneinheit 18 bereitgestellt werden kann. Die Entnahmeöffnung 48 ist zwischen dem oberen Wandelement 36 und der Trägeraufnahme 22 der Sitzbodeneinheit 18 für das vordere Tragrohr 14 angeordnet. Die Entnahmeöffnung 48 ist in einem montierten Zustand zumindest teilweise oberhalb des vorderen Tragrohrs 14 angeordnet. Der Begriff "oberhalb" soll dabei insbesondere als weiter von der Aufständerebene entfernt verstanden werden.

Das Komfortelement 28, das auf der Oberseite 30 der Sitzbodeneinheit 18 befestigt ist, weist in dem Bereich der Entnahmeöffnung 48 eine Ausnehmung 50 auf. Die Ausnehmung 50 weist im Wesentlichen eine gleiche Form auf wie die Entnahmeöffnung 48. In einem korrekt montierten Zustand ist die Ausnehmung 50 des Komfortelements 28 deckungsgleich zu der Entnahmeöffnung 48 ausgerichtet. Die Ausnehmung 50 des Komfortelements 28 ist in korrekt montierten Zustand über der Entnahmeöffnung 48 angeordnet. Das Schwimmwestenmodul 34 kann durch die Entnahmeöffnung 48 und die Ausnehmung 50 in dem Komfortelement 28 aus dem Aufnahmebereich 32 entnommen werden. Um die Ausnehmung 50 und damit die Entnahmeöffnung 48 in einem Normalbetriebszustand des Flugzeugsitzes 10 zu verschließen, weist die Sitzbodeneinheit 18 ein Verschlusselement 52 auf. Das Verschlusselement 52 ist in einem Normalbetriebszustand in der Ausnehmung 50 angeordnet und verschließt diese dadurch. Das Verschlusselement 52 ist dabei im Wesentlichen aus einem durchsichtigen Kunststoff gebildet. Das Verschlusselement 52 ist verschwenkbar mit der Sitzbodeneinheit 18 verbunden. Das Verschlusselement 52 ist über ein Schwenklager gelenkig mit der Sitzbodeneinheit 18 verbunden. Das Schwenklager verbindet das Verschlusselement 52 mit dem unteren Wandelement 38. Dadurch kann das Verschlusselement 52 verschwenkt werden, um die Ausnehmung 50 und damit die Entnahmeöffnung 48 des Aufnahmebereichs 32 freizugeben. Das Verschlusselement 52 umfasst zumindest ein elastisches Element, welches dazu vorgesehen ist, eine Schließkraft auf das Verschlusselement 52 auszuüben. Das elastische Element ist dabei vorzugsweise von einem Gummielement ausgebildet. Grundsätzlich ist es auch denkbar, dass das elastische Element als ein anderes, dem Fachmann als sinnvoll erscheinendes federelastisches Element ausgebildet ist. Das elastische Element hält dabei das Verschlusselement 52 in seiner geschlossenen Stellung. Des Weiteren übt das elastische Element nach dem Öffnen des Verschlusselements 52 eine Schließkraft auf das Verschlusselement 52 aus, sodass dieses wieder selbsttätig geschlossen werden kann. Dadurch kann der Aufnahmebereich 32, nachdem das Schwimmwestenmodul 34 entnommen wurde, vorteilhaft wieder automatisch geschlossen werden. Grundsätzlich ist es auch denkbar, dass das Verschlusselement 52 abreißbar mit der Sitzbodeneinheit 18 verbunden ist oder lediglich über Kraft- und/oder Formschlusselemente mit dem Komfortelement 28 verbunden ist. In dem Normalbetriebszustand ist das Verschlusselement 52 verliersicher in der Ausnehmung 50 angeordnet. Dabei ist es denkbar, dass sowohl das Verschlusselement 52 als auch das Komfortelement 28 und/oder die Sitzbodeneinheit 18 im Bereich seiner Ausnehmung 50 zueinander korrespondierend ausgebildete Kraft- und/oder Formschlusselemente aufweisen, über die das Verschlusselement 52 mit dem Komfortelement 28 oder der Sitzbodeneinheit 18 verbindbar ist. Die Sitzbodeneinheit 18 weist dabei ein nicht näher dargestelltes Siegel auf, das das Verschlusselement 52 versiegelt, sodass einfach festgestellt werden kann, wenn das Verschlusselement 52 einmal geöffnet wurde.

In dem Normalbetriebszustand ist das Schwimmwestenmodul 34 in dem Aufnahmebereich 32 angeordnet und die Entnahmeöffnung 48 von dem Verschlusselement 52 verschlossen. Dabei ragt das Zugelement 54 des Schwimmwestenmoduls 34 aus der Entnahmeöffnung 48 aus dem Aufnahmebereich 32 heraus und ist durch einen Bereich zwischen dem Verschlusselement 52 und der Sitzbodeneinheit 18 bis unter die Sitzbodeneinheit 18 geführt. Dort ist das Zugelement 54 einfach von einem auf dem Flugzeugsitz 10 sitzenden Passagier zu ergreifen. In einem Notfall kann der Passagier einfach das unter dem Sitzboden 20 befindliche Zugelement 54 des Schwimmwestenmoduls 34 ergreifen. Durch Ziehen an dem Zugelement 54 wird das Schwimmwestenmodul 34 durch die Entnahmeöffnung 48 aus dem Aufnahmebereich 32 gezogen. Dabei verdrängt das Schwimmwestenmodul 34 das Verschlusselement 52, das durch seine schwenkbare Lagerung aus der Ausnehmung 50 des Komfortelements 28 klappt. Dadurch kann das Schwimmwestenmodul 34 durch die Entnahmeöffnung 48 und die Ausnehmung 50 des Komfortelements 28 aus dem Aufnahmebereich 32 gezogen werden.

### Bezugszeichen

- 10: Flugzeugsitz
- 12: Aufständereinheit
- 14: Tragrohr
- 16: Tragrohr
- 18: Sitzbodeneinheit
- 20: Sitzboden
- 22: Trägeraufnahme
- 24: Trägeraufnahme
- 26: Unterseite
- 28: Komfortelement
- 30: Oberseite
- 32: Aufnahmebereich
- 34: Schwimmwestenmodul
- 36: oberes Wandelement
- 38: unteres Wandelement
- 40: Seitenwandelement
- 42: Seitenwandelement
- 44: Seitenwandelement
- 46: hinteres Ende
- 48: Entnahmeöffnung
- 50: Ausnehmung
- 52: Verschlusselement
- 54: Zugelement
- 56: Anbindungselement
- 58: Anbindungselement
- 64: Rotationsachse
- 66: Zentralschaumbereich
- 68: Seitenschaumbereich
- 70: Seitenschaumbereich

## Patentansprüche

1. Flugzeugsitzvorrichtung mit einer Sitzbodeneinheit (18), die eine Grundstruktur eines Sitzbodens (20) ausbildet, wobei die Sitzbodeneinheit (18) eine vordere (22) und eine hintere (24) Trägeraufnahme zur Kopplung an eine Aufständereinheit (12) sowie einen Aufnahmebereich (32) zur Aufnahme eines Schwimmwestenmoduls (34) aufweist, wobei der Aufnahmebereich (32) ein Volumen aufspannt, in dem das zu transportierende oder zu verstauende Schwimmwestenmodul (34) angeordnet werden kann, wobei die Sitzbodeneinheit (18) zumindest ein oberes Wandelement (36), das zumindest eine Auflagefläche für ein Komfortelement (28) bildet und den Aufnahmebereich (32) in Richtung einer Oberseite (30) der Sitzbodeneinheit (18) begrenzt, zumindest ein unteres Wandelement (38), das den Aufnahmebereich (32) nach unten hin begrenzt, und wenigstens ein Seitenwandelement (40, 42, 44) aufweist, welches den Aufnahmebereich (32) in einer horizontalen Ebene seitlich begrenzt, wobei der Aufnahmebereich (32) in Sitzrichtung im Wesentlichen schräg ausgebildet ist, wobei der Aufnahmebereich (32) von einem hinteren, unteren Bereich in Richtung eines vorderen Endes nach oben von einer Aufständerebene weg verläuft, wobei die Sitzbodeneinheit (18) eine Entnahmeöffnung (48) zur Entnahme des Schwimmwestenmoduls (34) aus dem Aufnahmebereich (32) aufweist, welche zumindest teilweise zwischen dem oberen Wandelement (36) und der vorderen Trägeraufnahme (22) der Sitzbodeneinheit (18) angeordnet ist.

2. Flugzeugsitzvorrichtung nach Anspruch 1, **dadurch gekennzeichnet, dass** das untere Wandelement (38) von einem hinteren Ende (46) des Aufnahmebereichs (32) in Richtung der vorderen Trägeraufnahme (22) schräg nach oben verläuft.

3. Flugzeugsitzvorrichtung nach Anspruch 1 oder 2, **dadurch gekennzeichnet, dass** das obere Wandelement (36) und das untere Wandelement (38) einstückig ausgebildet sind.

4. Flugzeugsitzvorrichtung nach einem der vorhergehenden Ansprüche, **dadurch gekennzeichnet, dass** zumindest das obere und/oder das untere Wandelement (36, 38) zumindest zum Großteil eine dünne Wandstärke aufweisen, wobei eine Stärke der Wandelemente (36, 38) weniger als 20 mm aufweist.

5. Flugzeugsitzvorrichtung nach einem der vorhergehenden Ansprüche, **dadurch gekennzeichnet, dass** das obere Wandelement (36) eine Erhöhung der Sitzbodeneinheit (18) ausbildet.

6. Flugzeugsitzvorrichtung nach einem der vorhergehenden Ansprüche, **dadurch gekennzeichnet, dass** der Aufnahmebereich (32) bis auf die Entnahmeöffnung (48) zumindest im Wesentlichen geschlossen ausgebildet ist.

7. Flugzeugsitzvorrichtung nach einem der vorhergehenden Ansprüche, **dadurch gekennzeichnet, dass** der Aufnahmebereich (32) zumindest im Wesentlichen zwischen der vorderen und der hinteren Trägeraufnahme (22, 24) der Sitzbodeneinheit (18) angeordnet ist.

8. Flugzeugsitzvorrichtung nach einem der vorhergehenden Ansprüche, **dadurch gekennzeichnet, dass** die Sitzbodeneinheit (18) zumindest dazu vorgesehen ist, zwischen einer Sitzstellung und einer Komfortstellung verstellt zu werden, wobei die Sitzbodeneinheit (18) über ein Torsionsrohr und eine Mechanik zwischen der Sitzstellung und der Komfortstellung verstellbar ist.

9. Flugzeugsitzvorrichtung nach einem der vorhergehenden Ansprüche, **gekennzeichnet durch** wenigstens ein Verschlusselement (52), das dazu vorgesehen ist, den Aufnahmebereich (32) in wenigstens einem Betriebszustand zumindest im Wesentlichen zu verschließen.

10. Sitz, insbesondere Flugzeugsitz, mit einer Flugzeugsitzvorrichtung nach einem der vorhergehenden Ansprüche.

## Claims

1. Aircraft seat device with a seat bottom unit (18) which forms a basic structure of a seat bottom (20),
the seat bottom unit (18) comprising a front carrier accommodation (22) and a rear carrier accommodation (24) for a coupling to a mounting unit (12) and comprising a receiving region (32) for receiving a lifejacket module (34), the receiving region (32) spanning a volume in which to arrange the lifejacket module (34) that is to be transported or stowed,
the seat bottom unit (18) comprising at least one upper wall element (36) forming at least one support surface for a comfort element (28) and delimiting the receiving region (32) towards an upper side (30) of the seat bottom unit (18), at least one lower wall element (38) delimiting the receiving region (32) downwards and at least one side wall element (40, 42, 44) delimiting the receiving region (32) sidewise in a horizontal plane,
the receiving region (32) being implemented substantially obliquely in a sitting direction, the receiving region (32) extending from a rear, lower region towards a front end upwards, away from a mounting plane,
the seat bottom unit (18) comprising a removal opening (48) for a removal of the lifejacket module (34) from the receiving region (32), which is arranged at least partly between the upper wall element (36) and the front carrier accommodation (22) of the seat bottom unit (18).

2. Aircraft seat device according to claim 1, **characterised in that** the lower wall element (38) extends from a rear end (46) of the receiving region (32) towards the front carrier accommodation (22) obliquely upwards.

3. Aircraft seat device according to claim 1 or 2, **characterised in that** the upper wall element (36) and the lower wall element (38) are implemented integrally.

4. Aircraft seat device according to one of the preceding claims, **characterised in that** at least a large portion at least of the upper wall element (36) and/or of the lower wall element (38) has a thin wall thickness, a thickness of the wall elements (36, 38) being smaller than 20 mm.

5. Aircraft seat device according to one of the preceding claims, **characterised in that** the upper wall element (36) forms an elevation of the seat bottom unit (18).

6. Aircraft seat device according to one of the preceding claims, **characterised in that** the receiving region (32) is implemented to be at least substantially closed, with the exception of the removal opening (48).

7. Aircraft seat device according to one of the preceding claims, **characterised in that** the receiving region (32) is arranged at least substantially between the front carrier accommodation (22) and the rear carrier accommodation (24) of the seat bottom unit (18).

8. Aircraft seat device according to one of the preceding claims, **characterised in that** the seat bottom unit (18) is at least configured to be adjusted between a sitting position and a comfort position, the seat bottom unit (18) being adjustable between the sitting position and the comfort position via a torsion tube and a mechanism.

9. Aircraft seat device according to one of the preceding claims, **characterised by** at least one closure element (52), which is configured for at least substantially closing the receiving region (32) in at least one operation state.

10. Seat, in particular aircraft seat, with an aircraft seat device according to one of the preceding claims.

## Revendications

1. Dispositif de siège d'avion avec une unité de fond de siège (18) formant une structure basique d'un fond de siège (20),
l'unité de fond de siège (18) comprenant un réceptacle-porteur avant (22) et un réceptacle-porteur derrière (24) pour un couplement avec une unité de montage (12) et comprenant une zone recevante (32) pour recevoir un module gilet sauvetage (34), la zone recevante (32) présentant un volume dans lequel le module gilet sauvetage (34) qui est à transporter ou ranger peut être disposé,
l'unité de fond de siège (18) comprenant au moins un élément de paroi supérieur (36), qui forme au moins une surface de support pour un élément de confort (28) et délimite la zone recevante (32) vers une surface supérieure (30) de l'unité de fond de siège (18), au moins un élément de paroi inférieur (38), qui délimite la zone recevante (32) vers le bas, et au moins un élément de paroi latérale (40, 42, 44), qui délimite la zone recevante (32) latéralement dans un plan horizontal,
la zone recevante (32) étant réalisée sensiblement en oblique dans une direction d'assise, la zone recevante (32) s'étendant d'une zone inférieure arrière vers une extrémité avant, à l'écart d'un plan de montage, vers le haut,
l'unité de fond de siège (18) ayant une aperture d'enlèvement (48) pour un enlèvement du module gilet sauvetage (34) de la zone recevante (32), ladite aperture d'enlèvement (48) étant disposée au moins partiellement entre l'élément de paroi supérieur (36) et le réceptacle-porteur avant (22) de l'unité de fond de siège.

2. Dispositif de siège d'avion selon la revendication 1, **caractérisé en ce que** l'élément de paroi inférieur (38) s'étend d'une extrémité arrière (46) de la zone recevante (32) vers le réceptacle-porteur avant (22) en oblique vers le haut.

3. Dispositif de siège d'avion selon la revendication 1 ou 2, **caractérisé en ce que** l'élément de paroi supérieur (36) et l'élément de paroi inférieur (38) sont réalisés intégralement.

4. Dispositif de siège d'avion selon l'une quelconque des revendications précédentes, **caractérisé en ce qu'**au moins l'élément de paroi supérieur (36) et/ou l'élément de paroi inférieur (38) présentent au moins en grande partie une épaisseur de paroi mince, une épaisseur des éléments de paroi (36, 38) étant inférieure à 20 mm.

5. Dispositif de siège d'avion selon l'une quelconque des revendications précédentes, **caractérisé en ce que** l'élément de paroi supérieur (36) forme une élévation de l'unité de fond de siège (18).

6. Dispositif de siège d'avion selon l'une quelconque des revendications précédentes, **caractérisé en ce que** la zone recevante (32) est réalisée au moins sensiblement fermée, à l'exception de l'aperture d'enlèvement (48).

7. Dispositif de siège d'avion selon l'une quelconque des revendications précédentes, **caractérisé en ce que** la zone recevante (32) est disposée au moins sensiblement entre le réceptacle-porteur avant (22) et le réceptacle-porteur arrière (24) de l'unité de fond de siège (18).

8. Dispositif de siège d'avion selon l'une quelconque des revendications précédentes, **caractérisé en ce que** l'unité de fond de siège (18) est au moins configurée à être ajustée entre une position d'assise et une position de confort, l'unité de fond de siège (18) étant ajustable entre la position d'assise et la position de confort par le biais d'un tube de torsion et d'un mécanisme.

9. Dispositif de siège d'avion selon l'une quelconque des revendications précédentes, **caractérisé par** au moins un élément de fermeture (52) prévu pour au moins sensiblement fermer la zone recevante (32) en au moins un état d'opération.

10. Siège, notamment siège d'avion, avec un dispositif de siège d'avion selon l'une quelconque des revendications précédentes.
